# EUROPÄISCHE PATENTSCHRIFT

(11) **EP 3 946 888 B1**
(45) Veröffentlichungstag und Bekanntmachung des Hinweises auf die Patenterteilung: **07.06.2023**
(21) Anmeldenummer: 20715051.7
(22) Anmeldetag: 27.03.2020
(51) Int. Cl.: B29C 49/48, B29C 49/06, B29K 67/00, B29K 23/00, B29L 31/00

(54) **BLASFORMWERKZEUG FÜR EINE BLASFORMMASCHINE**
BLOW MOULDING TOOL FOR A BLOW MOULDING MACHINE
OUTIL DE SOUFFLAGE SUR MATRICE POUR UNE MACHINE DE SOUFFLAGE SUR MATRICE

(30) Priorität: 29.03.2019 CH 4132019
(43) Veröffentlichungstag der Anmeldung: 09.02.2022
(73) Patentinhaber: ALPLA Werke Alwin Lehner GmbH & Co. KG, 6971 Hard (AT)
(72) Erfinder: KÜNZ, Johann, 6971 Hard (AT)
(74) Vertreter: Bohest AG Branch Ostschweiz
(86) Internationale Anmeldenummer: PCT/EP2020/058664
(87) Internationale Veröffentlichungsnummer: WO 2020/201061

(56) Entgegenhaltungen:
- EP-A2- 2 208 606
- WO-A1-2017/005561
- FR-A1- 2 982 789
- US-A1- 2018 162 037

## Beschreibung

Die Erfindung betrifft ein Blasformwerkzeug für eine Blasformmaschine zur Herstellung von Kunststoffbehältern in einem Extrusions- oder Streckblasprozess gemäss dem Oberbegriff des Patentanspruchs 1.

Die in der Vergangenheit üblichen Behältnisse aus Weiss- oder Buntblech, aus Glas oder auch aus Keramik werden in zunehmendem Masse von Behältnissen aus Kunststoff abgelöst. Insbesondere für die Verpackung fluider Substanzen, beispielsweise von Getränken, Haushaltsprodukten, Pflegeprodukten, Kosmetika usw., kommen mittlerweile hauptsächlich Kunststoffbehältnisse zum Einsatz. Das geringe Gewicht und die geringeren Kosten spielen sicher eine nicht unerhebliche Rolle bei dieser Substitution. Die Verwendung rezyklierbarer Kunststoffmaterialien und die insgesamt günstigere Gesamtenergiebilanz bei ihrer Herstellung tragen auch dazu bei, die Akzeptanz von Kunststoffbehältnissen, insbesondere von Kunststoffflaschen, beim Konsumenten zu fördern.

Ein- oder mehrschichtige Kunststoffbehälter beispielsweise aus Polyolefinen werden oft in einem Extrusionsblasverfahren, insbesondere in einem Schlauchblasverfahren hergestellt. Dabei wird mit einem Extrusionskopf üblicherweise kontinuierlich ein Kunststoffschlauch extrudiert, der ein- oder mehrschichtig ausgebildet sein kann. Der Kunststoffschlauch wird abschnittsweise in eine Formkavität eines Blasformwerkzeugs eingebracht, durch ein mit Überdruck eingebrachtes Blasmedium in die gewünschte Form gebracht, abgekühlt und entformt. Das Blasformwerkzeug besteht üblicherweise aus zwei Blasformhälften, in denen jeweils eine Hälfte der Formkavität ausgebildet ist. Die Blasformhälften werden periodisch geöffnet, geschlossen und wieder geöffnet, um einen Schlauchabschnitt in die Formkavität einzubringen und nach dem Aufblasen den fertigen Behälter wieder zu entformen.

Ein weiteres, sehr häufig eingesetztes Herstellverfahren für Kunststoffbehälter stellt das Streckblasen dar. Bei diesem Verfahren wird ein sogenannter Preform, der meist eine längliche, röhrchenartige Gestalt besitzt, an seinem einen Längsende einen Boden und am anderen Längsende einen Halsbereich mit ausgeformten Gewindeabschnitten oder dergleichen aufweist, in eine Formkavität eines Blasformwerkzeugs eingesetzt und durch ein mit Überdruck eingebrachtes Blasmedium in die gewünschte Form gebracht. Dabei wird der Preform zusätzlich mit einem durch die Halsöffnung eingefahrenen Reckdorn in axiale Richtung gereckt. Nach dem Streck-/Blasvorgang wird der fertige Kunststoffbehälter abgekühlt und aus der Blasform entformt.

Der ein oder mehrschichtige Preform wird vor dem Streckblasprozess üblicherweise in einem separaten Spritzgiessverfahren hergestellt. Es ist auch schon vorgeschlagen worden, Preforms in einem Kunststoffpressformverfahren oder durch einen Extrusionsblasprozess herzustellen. Als Rohstoff für die Herstellung von Kunststoffbehältern im Streckblasprozess kommen vor allem Polyethylenterephthalat (PET) und ähnliche Materialien, wie z.B. Polyethylenfuranoat (PEF) oder Polyolefine, wie z.B. Polypropylen (PP), High Density Polyethylen (HDPE) oder Low Density Polyethylen (LDPE) zum Einsatz. PET ist vielfach erprobt und seine Eigenschaften sind hinlänglich bekannt. Im sogenannten Einstufen-Streckblasprozess wird der Preform unmittelbar nach seiner Herstellung in die Formkavität des Blasformwerkzeugs eingesetzt und zu einem Kunststoffbehälter aufgeblasen und gereckt. Vielfach werden die Kunststoffbehälter jedoch in einem zweistufigen Verfahren räumlich und zeitlich getrennt vom Streckblasprozess hergestellt und für die spätere Verwendung zwischengelagert. Beim späteren Streckblasprozess werden die Preforms zunächst wieder erwärmt, in die Formkavität eines Blasformwerkzeugs eingebracht, mit einem Reckdorn in Längsrichtung gestreckt und üblicherweise durch Überdruck zu einem Kunststoffbehälter gemäss der Formkavität aufgeblasen. Auf diese Weise können beide Prozesse, das Spritzgiessen und das Streckblasen, separat und optimal betrieben werden.

Auch beim Streckblasprozess wird üblicherweise ein Blasformwerkzeug eingesetzt, das aus zwei Blasformhälften besteht, in denen jeweils ein Teil der Formkavität ausgebildet ist. Die Blasformhälften werden periodisch geöffnet, geschlossen und wieder geöffnet, um den Preform einzusetzen, aufzublasen und zu recken und den fertigen Kunststoffbehälter zu entformen.

Damit der extrudierte Schlauch bzw. der erwärmte Preform beim Einsetzen in die Formkavität des Blasformwerkzeugs keinen Temperaturschock erleidet, der zu einem bereichsweisen Ausfrieren des Kunststoffmaterials führen und eine weitere optimale Verformung im Blasprozess behindern könnte, sollten die formgebenden Innenflächen des Blasformwerkzeugs beim Einsetzen des extrudierten Schlauchs bzw. des Preforms eine Temperatur aufweisen, die sich nicht wesentlich von der Temperatur des Schlauchs bzw. des Preforms unterscheidet. Das heisst, die Temperatur der Innenflächen des Blasformwerkzeuges weichen im Zeitpunkt des Einsetzens des extrudierten Schlauchs, bzw. des Preforms vorzugsweise nicht mehr als 10% von der Temperatur des extrudierten Schlauchs, bzw. des Preforms ab. Polyolefine werden typischerweise bei einer Temperatur von 180° Celsius mit einer Abweichung von bis zu 20° K eingesetzt, Polyethylenterephthalat wird typischerweise bei Temperaturen von 240° Celsius bis 280° Celsius mit einer Abweichung von bis zu 20° K eingesetzt. Andererseits muss das Blasformwerkzeug am Ende des Blasprozesses, vor dem Entformen des hergestellten Kunststoffbehälters soweit herunter gekühlt sein, dass der Polymerisierungsvorgang des Kunststoffmaterials weitgehend abgeschlossen ist und es beim weiteren Behandeln des Kunststoffbehälters zu keinen unterwünschten Verformungen mehr kommen kann.

Polyolefine werden typischerweise bei ca. 60° Celsius entformt wobei die Temperatur am Hals noch bei ca. 80° Celsius liegt und Polyethylenterephtalat bei ca. 30° Celsius, wobei der Hals- und Bodenbereich eine höhere Temperatur von rund 60° Celsius aufweisen kann. Damit entsteht eine entsprechend hohe Temperaturdifferenz während des Blasformvorgangs.

Blasformwerkzeuge sind üblicherweise mehrteilig aufgebaut und bestehen meist aus Aluminium oder Stahl oder auch aus Buntmetallen. Die beiden Blasformhälften eines Blasformwerkzeugs weisen jeweils einen Formkörper auf, in dem wenigstens ein Formnest ausgebildet ist. Der Formkörper ist auf einer Grundplatte aus Stahl montiert, die Bestandteil der Schliesseinheit der Blasformmaschine ist. Wegen der beim Blasformprozess auftretenden Drücke müssen die Grundplatten und die Formkörper relativ massiv ausgebildet sein. Aus dem Spritzgiessverfahren sind Formwerkzeuge bekannt, die sehr ähnlich aufgebaut sind, jedoch eine deutlich massivere Ausgestaltung aufweisen, um den beim Spritzgiessen auftretenden Drücken, die um ein Vielfaches höher sind als bei Blasformverfahren, standzuhalten.

Berücksichtigt man die relativ guten Wärmeleiteigenschaften der einzelnen Komponenten bei Blasformwerkzeugen, ist unmittelbar einsichtig, dass ein sehr grosser Aufwand für das periodische Aufheizen und Abkühlen der Blasformwerkzeuge getrieben werden muss, um einigermassen akzeptable Zykluszeiten zu erreichen und gleichzeitig qualitativ hochwertige Produkte herstellen zu können. Es ist bekannt, dass das Erwärmen bzw. Abkühlen des Blasformwerkzeugs mittels eines geeigneten Fluids, beispielsweise Wassers, das in Kanälen, Fräsungen und Bohrungen des Blasformwerkzeugs unter Druck zirkuliert wird, erfolgen kann. Zur Erzielung möglichst kurzer Zykluszeiten wird das Heiz-/Kühlfluid mit relativ hohem Druck durch die Kanäle, Fräsungen und Bohrungen geleitet. Damit das Blasformwerkzeug diesen hohen Drücken standhält, muss es umso massiver ausgebildet werden. In Verbindung mit den guten Wärmeleiteigenschaften der für das Blasformwerkzeug verwendeten Materialien ergibt sich daraus jedoch ein noch höherer Aufwand für das periodische Aufheizen und Abkühlen des Blasformwerkzeugs. Ausserdem erhöht sich durch die massivere Ausbildung des Blasformwerkzeugs auch der für das periodische Öffnen und Schliessen der Blasformhälften erforderliche Aufwand.

Alternative Lösungen wurden mit der WO2017/005561 A1, der US 2018/162037 A1 und der FR 2 982 789 A1 bekannt. Hier wird versucht, die Formen von ihren Trägern zu entkoppeln, sodass weniger Wärme aus den Formen ausgetragen wird.

Grundsätzlich ist beim Erwärmen und Abkühlen von Formwerkzeugen, insbesondere von Blasformwerkzeugen, zwischen kontinuierlicher Kühlung und Intervall-Kühlung zu unterscheiden. Hierbei wird bei kontinuierlicher Kühlung ein Kühlmedium kontinuierlich durch das Formwerkzeug geführt. Bei der Intervall-Kühlung wird abwechselnd ein erhitztes oder ein gekühltes Fluid in das Formwerkzeug geleitet. Im Spritzgiessverfahren werden sowohl die kontinuierliche Kühlung als auch die Intervall-Kühlung eingesetzt. Bei Blasformverfahren kommt hingegen die kontinuierliche Kühlung zur Anwendung.

Aufgrund der mangelnden Wirtschaftlichkeit wurde bis anhin darauf verzichtet, die Formen auf die vorliegend beschriebenen bevorzugten Temperaturen aufzuheizen. Der Aufwand, um die eingetragene Wärme wieder auszubringen ist enorm und bedingt eine sehr hohe Kühlleistung. Zudem verlängert dies die Zykluszeit, da bis zum Entformen gewartet werden muss, bis die gesamte Temperaturdifferenz abgebaut ist.

Aufgabe der vorliegenden Erfindung ist es, ein Blasformwerkzeug derart auszugestalten, dass auch bei Blasformverfahren die Intervall-Kühlung einsetzbar ist. Ein Blasformwerkzeug für eine Blasformmaschine soll daher dahingehend modifiziert werden, dass ein schnelles periodisches Aufheizen und Abkühlen des Blasformwerkzeugs ermöglicht ist. Dabei soll der Aufwand für das periodische Aufheizen und Abkühlen des Blasformwerkzeugs verringert werden können.

Die Lösung dieser Aufgaben erfolgt durch ein Blasformwerkzeug für eine Blasformmaschine zur Herstellung von Kunststoffbehältern in einem Extrusions- oder Streckblasprozess, welches die im Patentanspruch 1 aufgelisteten Merkmale aufweist. Weiterbildungen sowie vorteilhafte und bevorzugte Ausführungsvarianten der Erfindung sind Gegenstand der abhängigen Patentansprüche.

Die Erfindung schlägt ein Blasformwerkzeug für eine Blasformmaschine vor, welches zwei Blasformhälften umfasst, die jeweils wenigstens einen Formkörper, in dem wenigstens ein Formnest angeordnet ist, und eine den Formkörper aufnehmende Grundplatte aufweisen. Zwischen dem Formkörper und der Grundplatte und gegebenenfalls weiteren Bestandteilen der Blasformhälfte ist ein Isolationsblock aus einem thermisch isolierenden Material angeordnet.

Indem der mit wenigstens einem Formnest ausgestattete Formkörper gegenüber der Grundplatte und gegebenenfalls weiteren Bestandteilen der Blasformhälfte thermisch isoliert ist, ist die aufzuheizende bzw. wieder abzukühlende Masse deutlich reduziert und ist das Aufheizen bzw. Abkühlen im Wesentlichen nur noch auf den Formkörper selbst reduziert. Dadurch ist ein sehr viel geringerer Energieaufwand für das Aufheizen bzw. das Abkühlen des Formkörpers nötig. Wegen der geringeren Masse können das Aufheizen und das Abkühlen des Formkörpers in einer relativ kurzen Zeit bewerkstelligt werden. Die beheizten und in unmittelbarer Folge wieder gekühlten Wandungsflächen der Formnester erlauben in Verbindung mit polierten formgebenden Wandungsflächen und den kurzen Abkühlungszeiten auch die Herstellung von Kunststoffbehältern mit glänzenden Oberflächen.

Polierte Oberflächen sind Oberflächen, die beispielsweise mittels Polituren bearbeitet wurden und eine geringe Menge von Material abgetragen wurde, um eine entsprechende Oberfläche durch Abtragen von Rauheitsspitzen zu glätten und an dieser Oberfläche gegebenenfalls Glanz zu erzeugen. Von polierten Oberflächen wird typischerweise ab Mittenrauwerten von 0.8 µm gesprochen.

Der Glanz von Oberflächen wird mittels Reflektometern in sogenannten "gloss units" (GU) ausgedrückt. Vorliegend wird von Glanz gesprochen, wenn der Glanz 10 GU's überschreitet. Die Messung wird nach ISO 2813 durchgeführt. Für ganz oder teilweise transparente Objekte wird kein Reflektometer verwendet, sondern der Reflexionsgrad also der Quotient aus reflektiertem zu eingestrahltem Licht, für einen bestimmten Winkel angegeben. Bei ganz oder teilweise transparenten Kunststoffen wird von Glanz gesprochen, wenn der Reflexionsgrad 20% übersteigt.

Durch die erfindungsgemässe Ausbildung des Blasformwerkzeugs können sogar mit Kunststoffen, wie z.B. Polyolefinen, bei denen es bekanntermassen sonst ohne zusätzliche Arbeitsschritte, wie beispielsweise einem mehrschichtigen Aufbau des Behälters, bei dem die äusserste Schicht, die einen Glanz hervorrufen soll, niedrigviskos ist und zum Erreichen der geringen Viskosität unterschiedliche Zuschlagstoffe enthält, nicht möglich ist, solche glänzenden Oberflächen erzielt werden. Bei entsprechender Ausgestaltung der Wandungsflächen der Formnester können auch Kunststoffbehälter mit zumindest in Teilbereichen strukturierten Oberflächen hergestellt werden. Somit sind bei entsprechender Gestaltung der Wandungsflächen sogar Behälter herstellbar, die Oberflächen aufweisen, welche in Teilbereichen glänzend und in anderen Teilbereichen strukturiert ausgebildet sind.

Strukturiert heisst vorliegend, dass die Oberfläche des Behälters im Wesentlichen dem Negativ des Formkörpers entspricht, wobei die Abweichung zwischen dem Negativ und der späteren Oberfläche 15%, vorzugsweise 10%, besonders bevorzugt 5% nicht überschreitet.

Die Gesamtmasse des aus zwei Blasformhälften aufgebauten Blasformwerkzeugs ist auf das für die Aufnahme der beim Herstellprozess des Kunststoffbehälters auftretenden Kräfte unbedingt Nötige beschränkt und setzt sich für jede Blasformhälfte im Wesentlichen aus der Grundplatte, dem Isolationsblock und dem Formkörper zusammen. Gegebenenfalls kommen noch ein Kopfteil und ein Fussteil dazu. Die Verringerung der Gesamtmasse des Blasformwerkzeugs wirkt sich auch vorteilhaft auf die Energiekosten für die Bewegung der Blasformhälften zum Öffnen und Schliessen derselben aus. Eine erfindungsgemäss ausgebildete Blasform ermöglicht folglich die formgenaue Abbildung des Formnestes.

Eine Ausführungsvariante des Blasformwerkzeugs kann vorsehen, dass der Formkörper in den Isolationsblock eingebettet ist. Dadurch ist der Formkörper über einen wesentlichen Abschnitt der Erstreckung des wenigstens einen Formnests thermisch gut isoliert. Durch das Einbetten des Formkörpers ist die Bildung von Wärmebrücken verhindert. Die Abmessungen des Formkörpers und des Isolationsblocks können dabei derart gewählt sein, dass beim Einsatz einer Kopfplatte bzw. eines Fussteils für die Erstellung des Behälterhalses bzw. des Behälterbodens, auch diese gegenüber den Grundplatten der Blasformhälften thermisch isoliert sind und allfällige Wärmebrücken verhindert werden.

Es kann vorgesehen sein, dass der Isolationsblock in einen Formblock eingebettet ist. Der Formblock besteht aus der Grundplatte, einem Boden, zwei seitlich angeordneten Rahmenteilen und einem Halseinsatz. Die Rahmenteile sind mit Führungen ausgestattet sind.

Eine derartige Ausbildung führt zur Reduktion von Einzelteilen. Die Herstellung des Blasformwerkzeuges wird vereinfacht.

Es kann zudem vorgesehen sein, dass der Formblock und der Isolationsblock einteilig ausgebildet sind.

Mit anderen Worten, jede Formwerkzeughälfte ist lediglich zweiteilig ausgebildet und besteht aus einem Isolationsblock, der sämtliche Funktionen der Grundplatte und des Rahmens wie Halten und Führen übernimmt. Die Fertigung des Blasformwerkzeugs ist damit vereinfacht.

Bei einer weiteren Ausführungsvariante des Blasformwerkzeugs ist bei jeder Blasformhälfte der Formkörper derart in den Isolationsblock eingebettet, dass eine eine Formtrennebene definierende Stirnfläche des Formkörpers, von welcher aus sich eine das Formnest begrenzende formgebende Wandungsfläche in Richtung einer Rückseite des Formkörpers erstreckt, in einem kalten Zustand des Formkörpers gegenüber einer Oberseite des Isolationsblocks zurückspringt. Wird der Formkörper auf eine Betriebstemperatur von grösser als 100°C aufgeheizt, schliesst die Stirnfläche des Formkörpers bündig mit der Oberseite des Isolationsblocks ab bzw. überragt sie diesen sogar geringfügig. Durch diese Ausführungsvariante wird den unterschiedlichen Wärmeausdehnungskoeffizienten der eingesetzten Materialien Rechnung getragen und ist sichergestellt, dass die Formtrennebene ausschliesslich durch die Stirnflächen der Formkörper der Blasformhälften festgelegt ist. Bei einer Variante der Erfindung springt die Stirnfläche des Formkörpers im kalten Zustand des Formkörpers gegenüber der Oberseite des Isolationsblocks um 0,05 mm bis 0,5 mm zurück.

Eine weitere Ausführungsvariante der Erfindung sieht vor, dass der Isolationsblock aus einem duroplastischen, hochtemperaturbeständigen Kunststoff mit geringer Wärmeleitfähigkeit besteht.

Dies ermöglicht eine hohe Standdauer und verhindert ungewollte Wärmeströme.

Diese Kunststoffe zeichnen sich durch ihre sehr geringe Wärmeleitfähigkeit aus, die je nach Art des Kunststoffs nur 0,1 - 0,8 W/mK beträgt. Für den Einsatz in Verbindung mit Blasformwerkzeugen gemäss der Erfindung kommen insbesondere Kunststoffe aus der Gruppe bestehend aus Polyaryletherketonen, wie z.B. Polyetheretherketon (PEEK), Polyamiden, glasfaserverstärkten Kunststoffen und verstärkten Duroplasten mit einer Temperaturbeständigkeit bis mindestens 200°C in Frage. Es kann sich dabei insbesondere um einen harten Kunststoff oder ein hartes Kunststoffverbundmaterial handeln. Als harte Kunststoffe werden vorliegend Kunststoffe berücksichtigt, die eine Härte von mindestens 75 Shore aufweisen.

Dies ermöglicht das passgenaue Fertigen und verhindert zudem, dass während des Betriebes durch hohe Drücke hervorgerufene Deformationen entstehen.

Die Grundplatte jeder Blasformhälfte des Blasformwerkzeugs ist den grössten Beanspruchungen ausgesetzt, dient zur Befestigung der weiteren Komponenten der Blasformhälfte und muss die Schliesskräfte und die bei der Herstellung der Kunststoffbehälter auftretenden Druckkräfte aufnehmen. Mit Vorteil besteht die Grundplatte daher aus rostfreiem Stahl.

Eine Ausführungsvariante der Erfindung sieht vor, dass der Formkörper aus Aluminium besteht. Aluminium hat einen kleineren Wärmeausdehnungskoeffizienten als Stahl und besitzt eine höhere Wärmeleitfähigkeit. Daher stellt Aluminium für den Formkörper ein bevorzugtes Material dar.

Der Formkörper des Blasformwerkzeugs einer jeden Blasformhälfte weist eine, insbesondere in den Isolationsblock eingebettete, Rückseite auf, die mit, insbesondere einseitig offenen, Kanälen für den Durchfluss eines Heiz-/Kühlmediums versehen ist. Das Heiz-/Kühlmedium strömt dabei in möglichst grosser Nähe zur das Formnest begrenzenden formgebenden Wandungsfläche. Dadurch kann insbesondere beim Abkühlen des Formkörpers die Wärme der an die formgebende Wandungsfläche anliegenden Behälterwandung sehr gut abgeführt werden. Anders als beispielsweise beim Spritzgiessen kann beim Blasformen die Wärme nur einseitig über die gekühlte formgebende Wandungsfläche des Formkörpers abgeführt werden. Es empfiehlt sich daher, den Abstand des Heiz-/Kühlmediums von der formgebenden Wandungsfläche möglichst gering zu halten.

Die Kanäle werden in dieser Ausführungsvariante durch das Einbetten im Isolationsblock geschlossen, sodass ein Kühlkreislauf entsteht. Vor dem Einbetten sind diese Kanäle also einseitig offen und zugänglich.

Die Ausbildung von derartigen Kanälen am Formkörper ermöglicht es, die Kanäle beispielsweise in der Form frei auszubilden, wobei insbesondere geschwungene Formen ermöglicht sind oder Strömungsquerschnitte, die von einer runden Form abweichen. Derartige Ausbildungen sind beispielsweise in konventionellen Formkörpern nicht möglich, da in Kühlbohrungen keine Richtungswechsel möglich sind.

Vorzugsweise weist die Rückseite des Formkörpers Rippen auf, zwischen denen, insbesondere durch die, die Kanäle gebildet sind. Die Rippen sind vorzugsweise abwechselnd angeordnet und erstrecken sich von einer ersten Längsseite der Form, an welcher die Trennebene gebildet ist, in Richtung einer zweiten Längsseite der Form, jedoch nur soweit, dass zwischen der Rippe und der jeweiligen zweiten Längsseite eine Öffnung gebildet wird, die einen, dem Querschnitt der Kanäle entsprechenden, Querschnitt aufweist. Es bildet sich so ein zusammenhängender mäanderförmiger Kanal der sich über die Rückwand des Formkörpers erstreckt.

Die Rippen weisen eine Mindestwandstärke von 3 mm auf und überschreiten eine Wandstärke von vorzugsweise 8 mm nicht.

Beim Einbringen des Heiz-/Kühlmediums kann durch diese Rippen die Wärme sehr schnell der Formhälfte zugeführt oder aus dieser abgeführt werden.

Eine Ausführungsvariante der Erfindung sieht daher vor, dass der Formkörper im Bereich des Formnestes eine Mindestwandstärke von 1,5 mm bis 12 mm aufweist. Die Mindestwandstärke betrifft den Bereich in den Kühlkanälen, bzw. im Kanalgrund vom Kanalgrund zur Oberfläche des Formnestes hin. Diese Wandstärke überschreitet vorzugsweise eine Stärke von 6 mm nicht und ist bevorzugt kleiner als 4 mm.

Dies ermöglicht das schnelle Aufheizen oder Abkühlen des Formkörpers.

Bei einer Ausführungsvariante der Erfindung sind die Kanäle an der Rückseite des Formkörpers durch Giessen oder durch materialabtragende Bearbeitung erstellt. Giessen hat dabei den Vorteil, dass ein weiterer Bearbeitungsschritt für den Formkörper entfällt. Die Kanäle können aber auch durch alternative Fertigungsverfahren, beispielsweise generative Fertigungsverfahren wie z.B. Laserschmelzen oder Metalldruck hergestellt werden. Bei derartigen Verfahren können beispielsweise Details noch besser ausgearbeitet werden.

Vorzugsweise ist durch die Anordnung des Formkörpers an oder auf dem Isolationsblock ein geschlossener Kühl- oder Heizkreislauf gebildet, der gegenüber seiner Umgebung abgedichtet ist und lediglich Vorrichtungen zur Zufuhr und zur Abfuhr des Heiz-/Kühlmediums aufweist.

Die Heiz-/Kühlkanäle, insbesondere der Heiz-/Kühlkreislauf, sind vorzugsweise also einerseits durch den Isolationsblock begrenzt und andererseits durch den Formkörper.

Dabei kann zudem vorgesehen sein, dass im Isolationsblock entsprechend korrespondierende Rippen und/oder Kanäle angeordnet sind, sodass die Rippen und Kanäle des Formkörpers jeweils auf den Rippen und Kanälen des Isolationsblocks angeordnet sind und gemeinsam eine Heiz-/Kühlquerschnitt bilden.

Die Heiz-/Kühlquerschnitte können in ihrem Querschnitt einfach angepasst werden. Bei gegebenem Querschnitt ist es zudem ermöglicht, die jeweiligen Rippen auf dem Formkörper und auf dem Isolationsblock jeweils mit der halben Höhe zu fertigen. Dies erleichtert die Fertigung.

Zweckmässigerweise dient der Isolationsblock nicht nur zur thermischen Isolation des Formkörpers gegenüber der Grundplatte. Bei einer weiteren Ausführungsvariante ist der Isolationsblock daher mit Kanälen und/oder Bohrungen für die Zu- und Abfuhr eines Heiz-/Kühlmediums zu den an der Rückseite des Formkörpers ausgebildeten Kanälen ausgestattet. Eine Ausführungsvariante der Erfindung kann dabei vorsehen, dass alle Anschlüsse für die Zu- und Abfuhr von heissen und kalten Medien am Isolationsblock vorgesehen sind. Die Anschlüsse haben dann keinen thermischen Kontakt beispielsweise mit der Grundplatte oder anderen Bestandteilen des Werkzeugs.

Je nach Grösse des wenigstens einen Formnests im Formkörper können im Isolationsblock und an der Rückseite des Formkörpers zwei oder mehrere voneinander getrennte Heiz-/Kühlkreise vorgesehen sein. Das Vorsehen mehrerer Heiz-/Kühlkreise erlaubt ein schnelleres Einbringen bzw. Verdrängen des Heiz-/Kühlmediums, um das Formteil aufzuheizen bzw. wieder abzukühlen. Mit Vorteil beträgt dabei der Druck des Heiz-/Kühlmediums bis zu 15 bar, der Druck kann jedoch auch über 20 bar sein und bis zu 25 bar betragen. In Verbindung mit mehreren Heiz-/Kühlkreisen ist dadurch ein sehr schnelles Aufheizen bzw. Abkühlen ermöglicht, was sich vorteilhaft auf die Zykluszeiten auswirkt. Als Heiz-/Kühlmedium für den Formkörper wird üblicherweise Wasser eingesetzt.

Eine weitere Ausführungsvariante des erfindungsgemässen Blasformwerkzeugs kann vorsehen, dass auf der Grundplatte jeder Blasformhälfte zwei oder mehrere Formkörper montiert sind. Dabei kann jeder Formkörper durch einen separaten Isolationsblock gegenüber der Grundplatte und den übrigen Bestandteilen der Blasformhälfte thermisch isoliert sein, oder die Formkörper können durch einen gemeinsamen Isolationsblock gegenüber der Grundplatte und den übrigen Bestandteilen der Blasformhälfte thermisch isoliert sein.

Das erfindungsgemässe Blasformwerkzeug kann für den Einsatz in einer Extrusionsblasformmaschine oder in einer Streckblasformmaschine ausgebildet sein. Extrusionsblasformmaschinen oder Streckblasformmaschinen mit einem erfindungsgemäss ausgebildeten Blasformwerkzeug zeichnen sich durch einen verringerten Energieaufwand für das Aufheizen bzw. das Abkühlen der Formkörper aus. Die Zykluszeiten können dadurch verringert werden. Wegen der üblicherweise auch verringerten Gesamtmasse ist auch der Energieaufwand für die Bewegung der Blasformhälften zum periodischen Öffnen und Schliessen des Blasformwerkzeugs reduziert.

Ein Verfahren zur Herstellung eines Kunststoffbehälters mit einem Blasformwerkzeug wie vorliegend beschrieben gemäss einer der Ausführungsformen der Erfindung weist die folgenden Verfahrensschritte auf:
a) Aufheizen eines Formkörpers durch Zuführung eines Heizmediums,
b) Einbringen eines Preforms oder eines extrudierten Schlauchs in den Formkörper,
c) Schließen des Blasformwerkzeugs,
d) Formen des Kunststoffbehälters durch Aufblasen des Preforms oder des extrudierten Schlauchs und durch Anlegen des Preforms oder des extrudierten Schlauchs an die Wandungsflächen des Formkörpers,
e) Abkühlen des Formkörpers durch Zuführung eines Kühlmediums,
f) Öffnen des Blasformwerkzeugs,
g) Auswerfen des Kunststoffbehälters.

Die Verfahrensschritte entsprechen im Wesentlichen denjenigen der Blasformverfahren mit aus dem Stand der Technik bekannten, konventionell ausgebildeten Blasformwerkzeugen. Zum Unterschied von den bekannten Blasformverfahren erfolgt die Kühlung des Formkörpers mittels einer Intervall-Kühlung. Dabei werden die formgebenden Wandungsflächen des Formkörpers in sehr kurzer Zeit abwechselnd mit einem entsprechend temperierten Heiz- bzw. Kühlmedium beaufschlagt. Vorzugsweise wird der Formkörper derart gekühlt, dass dieser eine mittlere Abkühlgeschwindigkeit von mindestens 5 Kelvin pro Sekunde, vorzugsweise 15 Kelvin pro Sekunde und besonders bevorzugt 30 Kelvin pro Sekunde aufweist.

Eine spezielle Verfahrensführung zur Herstellung eines Kunststoffbehälters zeichnet sich dadurch aus, dass während der vorstehend angeführten Verfahrensschritte d) und e) jene Oberflächenbereiche, welche in Kontakt mit polierten Wandungsflächen des Formkörpers sind, eine glänzende Oberfläche am Kunststoffbehälter ausbilden.

Eine weitere Verfahrensvariante zeichnet sich dadurch aus, dass während der Schritte d) und e) jene Oberflächenbereiche, welche in Kontakt mit strukturierten Wandungsflächen des Formkörpers sind, eine strukturierte Oberfläche am Kunststoffbehälter ausbilden.

Besonders einfach und kostengünstig ist das erfindungsgemässe Verfahren durchführbar, wenn als Heizmedium und als Kühlmedium entsprechend temperiertes Wasser eingesetzt wird, welches unter entsprechend hohen Drücken in Heiz- bzw. Kühlkanäle an einer Rückseite des Formkörpers zugeführt wird.

Bei einer weiteren Verfahrensvariante wird ein Preform bzw. ein extrudierter Schlauch im Wesentlichen umfassend ein Polyolefin in das Blasformwerkzeug eingesetzt. Der extrudierte Schlauch bzw. der Preform besteht vorzugsweise im Wesentlichen aus einem Polyolefin. Mit anderen Worten, der Preform bzw. der extrudierte Schlauch weist weniger als 2% Fremdstoffe auf und ist insbesondere homogen ausgebildet. Während der Herstellung des Kunststoffbehälters werden das Heizmedium mit einer Temperatur von 120° C bis 200 ° C, vorzugsweise 160° C, und das Kühlmedium mit einer Temperatur von 5 bis 40 ° C, vorzugsweise 15° C, zugeführt. In Verbindung mit polierten formgebenden Wandungsflächen und/oder mit Strukturen versehenen Wandungsflächen des Formkörpers sind auf diese Weise auch bei derartigen Kunststoffen sehr einfach und reproduzierbar Behälter mit glänzenden und/oder strukturierten Oberflächen herstellbar.

Eine weitere Verfahrensvariante zur Herstellung eines Kunststoffbehälters zeichnet sich dadurch aus, dass beispielsweise die Zykluszeit mit einer vollflächig gekühlten Blasform für die Herstellung eines Kunststoffbehälters mit 200ml Füllvolumen bloss 10 bis 15 Sekunden, bevorzugt 12 Sekunden beträgt. Diese Zykluszeiten erlauben eine kostengünstige massentechnische Herstellung von Kunststoffbehältern des vorgegebenen Füllvolumens.

Weitere Vorteile und Ausführungsvarianten der Erfindung ergeben sich aus der nachstehenden Beschreibung von Ausführungsbeispielen unter Bezugnahme auf die schematischen Zeichnungen. Es zeigen in nicht massstabsgetreuer Darstellung:
- Fig. 1: ein Blasformwerkzeug des Stands der Technik mit zwei Blasformhälften,
- Fig. 2: eine perspektivische Ansicht einer Blasformhälfte eines erfindungsgemässen Blasformwerkzeugs;
- Fig. 3: eine perspektivische Ansicht eines in einen Isolationsblock eingebetteten Formkörpers; und
- Fig. 4: eine perspektivische Ansicht der Rückseite des Formkörpers aus Fig. 3.

Aus Gründen des besseren Verständnisses tragen in den einzelnen Figuren gleiche Bestandteile und Komponenten des Blasformwerkzeuges die gleichen Bezugszeichen.

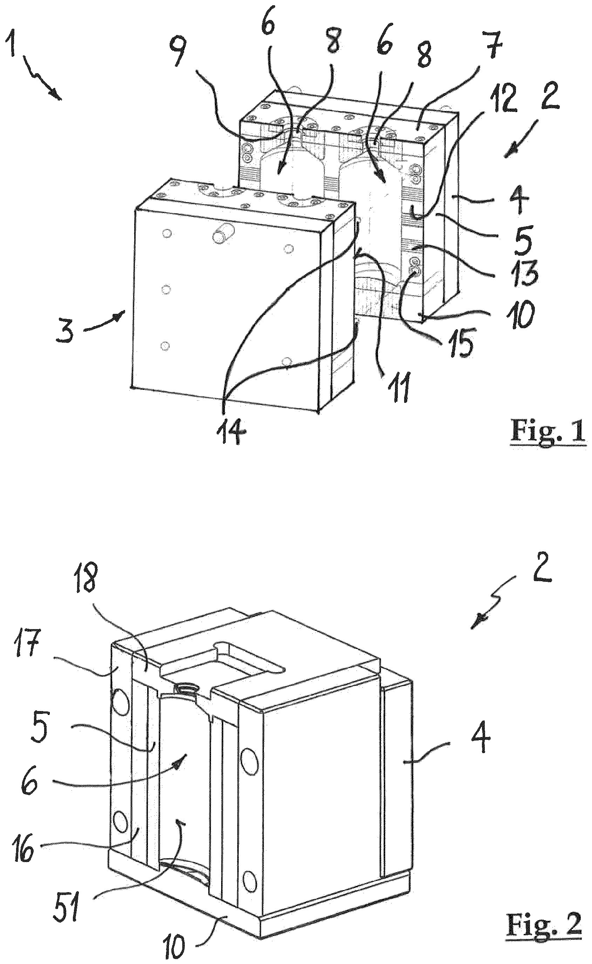

Fig. 1 zeigt anhand eines Blasformwerkzeugs des Stands der Technik den prinzipiellen Aufbau eines derartigen Werkzeugs. Das gesamthaft mit dem Bezugszeichen 1 versehene Blasformwerkzeug besteht aus zwei Blasformhälften 2, 3, die relativ zueinander lateral verschiebbar sind, um das Blasformwerkzeug 1 periodisch zu öffnen und wieder zu schliessen. Jede Blasformhälfte umfasst eine Grundplatte 4, die einen Teil einer Schliesseinheit einer Blasformmaschine bildet. Auf der Grundplatte 4 ist ein Formkörper 5 montiert, in dem ein oder mehrere Formnester 6 ausgebildet sind. Gemäss dem dargestellten Ausführungsbeispiel weist der Formkörper 5 zwei Formnester auf, die eine Hälfte der Form eines Körpers eines Kunststoffbehälters festlegen. Eine Kopfplatte 7 ist mit einer Kavität 8 zur Festlegung eines Halsabschnitts des Kunststoffbehälters ausgestattet. Im Fall eines Blasformwerkzeugs für eine Extrusionsblasformmaschine kann an der Kopfplatte 7 auch noch ein Halsmesser 9 für das Abtrennen eines in das Blasformwerkzeug 1 eingesetzten extrudierten Kunststoffschlauchs vorgesehen sein. Ein Bodenteil 10 schliesst die Formnester 6 am anderen Ende des Blasformwerkzeugs 1 ab. An den einander zugewandten Oberflächen 11, 12 der Blasformhälften 2, 3, welche eine Trennebene des Blasformwerkzeugs 1 festlegen, können Entlüftungsschlitze 13 ausgebildet sein. An einer der Blasformhälften 3 sind Führungsbolzen 14 ausgebildet, die beim Schliessen der Blasformhälften 2, 3 in Führungsbuchsen 15 der anderen Blasformhälfte 2 gleiten.

Eine Blasformhälfte eines erfindungsgemäss ausgebildeten Blasformwerkzeugs ist in Fig. 2 gesamthaft mit dem Bezugszeichen 2 versehen. Es versteht sich, dass die in Fig. 2 nicht dargestellte zweite Blasformhälfte korrespondierend zu der ersten Blasformhälfte 2 ausgebildet ist. Die Blasformhälfte 2 umfasst wiederum eine Grundplatte 4 und einen Formkörper 5, in dem ein Formnest 6 ausgebildet ist. Das eine Hälfte der Form eines Behälterkörpers festlegende Formnest 6 ist von einer formgebenden Wandungsfläche 51 begrenzt. Zum Unterschied von der in Fig. 1 dargestellten Blasformhälfte ist der Formkörper 5 in einen Isolationsblock 16 eingebettet. Der Isolationsblock 16 besteht aus einem thermisch isolierenden Kunststoff oder Kunststoffverbundmaterial und isoliert den Formkörper 5 thermisch gegenüber der Grundplatte 4, einem daran befestigten Rahmen 17, einem Halseinsatz 18, welcher der Kopfplatte 7 in Fig. 1 entspricht, sowie dem Bodenteil 10. Der Isolationsblock 16 verhindert Wärmebrücken zwischen dem Formkörper 5 und den diesen umgebenden Bestandteilen des Blasformwerkzeugs. Der Halseinsatz 18 ist gemäss dem dargestellten Ausführungsbeispiel als ein separates Teil ausgebildet, das beim Schliessen der Blasformhälften zugestellt und beim Öffnen derselben wieder abgehoben wird. Der Halseinsatz 18 kann jedoch auch fest mit dem Rahmen 17 verbunden sein. Es sei noch erwähnt, dass aus Gründen der Übersichtlichkeit in Fig. 2 auf die Darstellung von Verschraubungen, Führungsbolzen bzw. Führungsbuchsen und dergleichen verzichtet wurde.

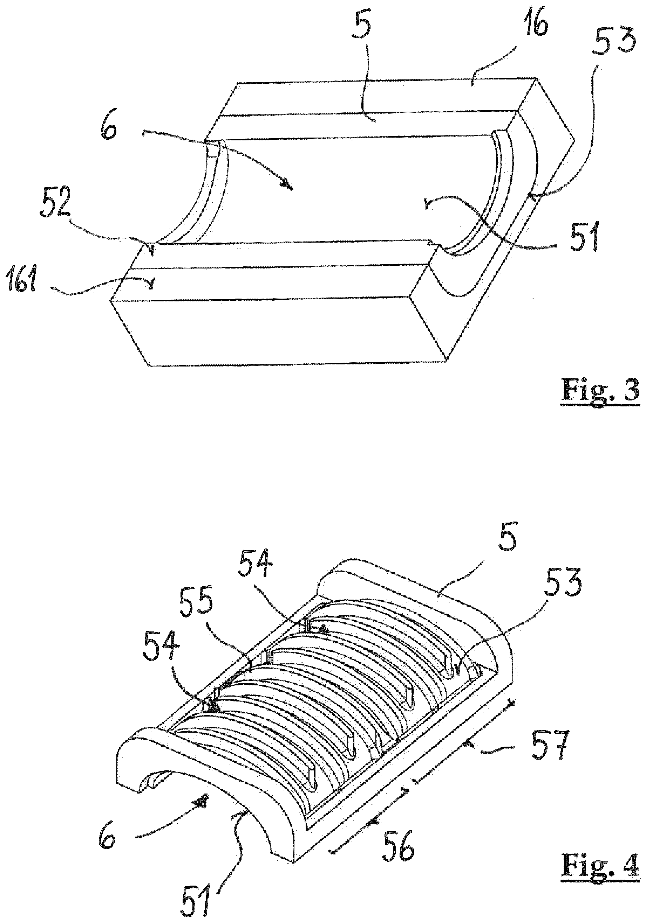

Fig. 3 zeigt ein Ausführungsbeispiel eines in einen Isolationsblock 16 eingebetteten Formkörpers 5. Das Formnest trägt wiederum das Bezugszeichen 6. Die das Formnest 6 begrenzende Wandungsfläche ist mit dem Bezugszeichen 51 versehen. Das Formnest 6 definiert beispielsweise die Hälfte der Form eines Behälterkörpers. Die Wandungsfläche 51 kann beispielsweise poliert ausgebildet sein. Der Formkörper 5 ist vollständig in den Isolationsblock 16 eingebettet, um sicherzustellen, dass keine unerwünschten Wärmebrücken zur Grundplatte 4 auftreten können. Der Formkörper 5 ist beispielsweise derart bemessen, dass im Isolationsblock 16 Platz für eine Kopfplatte bzw. für ein Fussteil für die Erstellung des Behälterhalses bzw. des Behälterbodens verbleibt. Auf diese Weise sind auch die Kopfplatte bzw. das Fussteil (jeweils nicht dargestellt) gegenüber der Grundplatte und dem Rahmen der Blasformhälfte thermisch isoliert und können allfällige Wärmebrücken verhindert werden.

Eine eine Formtrennebene definierende Stirnfläche 52 des Formkörpers 5, von welcher aus sich die das Formnest 6 begrenzende formgebende Wandungsfläche 51 in Richtung der Grundplatte erstreckt, springt in einem kalten Zustand des Formkörpers 5 gegenüber einer Oberseite 161 des Isolationsblocks 16 zurück. Wird der Formkörper 5 auf eine Betriebstemperatur von grösser als 100°C aufgeheizt, schliesst die Stirnfläche 52 des Formkörpers 5 bündig mit der Oberseite 161 des Isolationsblocks 16 ab bzw. kann sie diesen sogar geringfügig überragen. Im kalten Zustand springt die Stirnfläche 52 des Formkörpers 5 gegenüber der Oberseite 161 des Isolationsblocks 16 um einen Abstand zurück, der ca. 0,05 mm bis 0,5 mm beträgt. Wegen des sehr kleinen Abstands ist dieser Rücksprung in der Darstellung in Fig. 3 nicht ersichtlich. Die formgebende Wandungsfläche 51 weist zu einer Rückseite 53 des Formkörpers 5 einen möglichst kleinen Abstand auf. Mit anderen Worten weist der Formkörper 5 im Bereich des Formnests 6 eine Mindestwandstärke auf, die etwa 1,5 mm bis 12 mm beträgt.

Fig. 4 zeigt eine perspektivische Ansicht der Rückseite 53 des Formkörpers 5 aus Fig. 3. In der vom Betrachter abgewandten Seite des Formkörpers 5 ist das Formnest 6 ausgebildet. Die Rückseite 53 des Formkörpers 5 ist mit Kanälen 54 für den Durchfluss eines Heiz-/Kühlmediums, beispielsweise Wasser, versehen. Die Kanäle 54 können durch materialabtragende Bearbeitung, beispielsweise Fräsen und Bohren, des Formkörpers 5 erstellt sein. Sie sind voneinander durch Rippen abgegrenzt. In einer alternativen Ausführungsvariante können die Kanäle beim Giessen des Formkörpers oder durch alternative Fertigungsverfahren, beispielsweise Laserschmelzen oder Metalldruck, hergestellt sein. Die Rückseite 53 des Formkörpers 5 mit den Kanälen 54 ist im zusammengebauten Zustand des Blasformwerkzeugs in den Isolationsblock eingebettet (Fig. 3). Der Isolationsblock dient nicht nur zur thermischen Isolation des Formkörpers 5 gegenüber den übrigen Bestandteilen der Blasformhälfte. Vielmehr ist der Isolationsblock ebenfalls mit Kanälen und/oder Bohrungen für die Zu- und Abfuhr des Heiz-/Kühlmediums zu den an der Rückseite des Formkörpers ausgebildeten Kanälen ausgestattet. Es kann vorgesehen sein, dass alle Anschlüsse für die Zu- und Abfuhr von heissen und kalten Medien am Isolationsblock vorgesehen sind. Die Anschlüsse haben dann keinen thermischen Kontakt beispielsweise mit der Grundplatte oder anderen Bestandteilen des Blasformwerkzeugs.

Je nach Grösse des Formnests 6 im Formkörper 5 können an der Rückseite 52 des Formkörpers 5 auch zwei oder mehrere voneinander getrennte Heiz-/Kühlkreise vorgesehen sein. Im dargestellten Ausführungsbeispiel trennt eine Trennwand 55 die Kanäle 54 in zwei Heiz-/Kühlkreise 56, 57. Die einzelnen Heiz-/Kühlkreise sind als eine mäanderförmige Anordnung aus Kanälen gebildet. Das Vorsehen mehrerer Heiz-/Kühlkreise 56, 57 erlaubt ein schnelleres Einbringen bzw. Verdrängen des Heiz-/Kühlmediums, um den Formkörper aufzuheizen bzw. wieder abzukühlen. Mit Vorteil beträgt dabei der Druck des Heiz-/Kühlmediums bis zu 15 bar. In Verbindung mit mehreren Heiz-/Kühlkreisen 56, 57 ist dadurch eine sehr schnelles Aufheizen bzw. Abkühlen des Formkörpers 5 ermöglicht, was sich vorteilhaft auf die Zykluszeiten auswirkt. Als Heiz-/Kühlmedium für den Formkörper 5 wird üblicherweise Wasser eingesetzt. Das Heiz-/Kühlmedium strömt dabei in möglichst grosser Nähe zur das Formnest 6 begrenzenden formgebenden Wandungsfläche 51. Dadurch kann insbesondere beim Abkühlen des Formkörpers 5 die Wärme der an die formgebende Wandungsfläche 51 anliegenden Behälterwandung sehr gut abgeführt werden. Das Abführen der Wärme wird durch die die Kanäle bildenden Rippen zusätzlich verbessert. Anders als beispielsweise beim Spritzgiessen kann beim Blasformen die Wärme nur einseitig über die gekühlte formgebende Wandungsfläche des Formkörpers abgeführt werden.

Die vorangehende Figurenbeschreibung beschränkt sich auf die für das Verständnis der Erfindung erforderlichen Details. Es versteht sich jedoch, dass das Blasformwerkzeug sämtliche für seine Funktion erforderlichen Bauelemente aufweist. Beispielsweise sind Verriegelungselemente für die Blasformhälften und für die gegebenenfalls vorhandenen Kopf- und Fussteile vorgesehen, damit das Blasformwerkzeug bei den beim Blasvorgang auftretenden Innendrücken geschlossen bleibt. Auch ist das Blasformwerkzeug noch mit verschiedensten Anschlüssen versehen, beispielsweise um dieses an eine Versorgung mit einem Kühl-/Heizmedium anzuschliessen.

## Patentansprüche

1. Blasformwerkzeug für eine Blasformmaschine umfassend zwei Blasformhälften (2, 3), die jeweils wenigstens einen Formkörper (5), in dem wenigstens ein Formnest (6) angeordnet ist, und eine den Formkörper (5) aufnehmende Grundplatte (4) aufweisen, wobei, dass zwischen dem Formkörper (5) und der Grundplatte (4) und gegebenenfalls weiteren Bestandteilen der Blasformhälfte (2, 3) ein Isolationsblock (16) aus einem thermisch isolierenden Material angeordnet ist, **dadurch gekennzeichnet, dass** der Formkörper (5) eine in den Isolationsblock (16) eingebettete Rückseite (53) aufweist, die mit Kanälen (54) für den Durchfluss eines Heiz-/Kühlmediums versehen ist.

2. Blasformwerkzeug nach Anspruch 1, **dadurch gekennzeichnet, dass** der Formkörper (5) in den Isolationsblock (16) eingebettet ist.

3. Blasformwerkzeug nach Anspruch 2, **dadurch gekennzeichnet, dass** der Isolationsblock (16) in einen Formblock eingebettet ist, der aus der Grundplatte (4), einem Boden, zwei seitlich angeordneten Rahmenteilen und einen Halseinsatz besteht, wobei die Rahmenteile mit Führungen ausgestattet sind.

4. Blasformwerkzeug nach Anspruch 3, **dadurch gekennzeichnet, dass** der Formblock und der Isolationsblock (16) einteilig ausgebildet sind.

5. Blasformwerkzeug nach einem der Ansprüche 2 bis 4, **dadurch gekennzeichnet, dass** der Formkörper (5) derart in den Isolationsblock (16) eingebettet ist, dass eine eine Formtrennebene definierende Stirnfläche (52) des Formkörpers (5), von welcher aus sich eine das Formnest (6) begrenzende formgebende Wandungsfläche (51) in Richtung einer Rückseite des Formkörpers (5) erstreckt, in einem kalten Zustand des Formkörpers (5) gegenüber einer Oberseite des Isolationsblocks (16) zurückspringt, während die Stirnfläche (52) des Formkörpers (5) bei auf Betriebstemperatur aufgeheiztem Formkörper (5) bündig mit der Oberseite (161) des Isolationsblocks (16) abschliesst bzw. diesen geringfügig überragt.

6. Blasformwerkzeug nach Anspruch 5, **dadurch gekennzeichnet, dass** die Stirnfläche (52) des Formkörpers (5) im kalten Zustand des Formkörpers (5) gegenüber der Oberseite (161) des Isolationsblocks um 0,05 mm bis 0,5 mm zurückspringt.

7. Blasformwerkzeug nach einem der vorangehenden Ansprüche, **dadurch gekennzeichnet, dass** der Isolationsblock (16) aus einem duroplastischen, hochtemperaturbeständigen Kunststoff mit geringer Wärmeleitfähigkeit, insbesondere aus einem harten Kunststoff oder Kunststoffverbundmaterial besteht.

8. Blasformwerkzeug nach Anspruch 7, **dadurch gekennzeichnet, dass** der Isolationsblock (16) einen Kunststoff aus der Gruppe bestehend aus Polyaryletherketonen, wie z.B. Polyetheretherketon (PEEK), Polyamiden, glasfaserverstärkten Kunststoffen und verstärkten Duroplasten mit einer Temperaturbeständigkeit bis mindestens 200°C umfasst.

9. Blasformwerkzeug nach einem der vorangehenden Ansprüche, **dadurch gekennzeichnet, dass** die Grundplatte (4) aus rostfreiem Stahl besteht.

10. Blasformwerkzeug nach einem der vorangehenden Ansprüche, **dadurch gekennzeichnet, dass** der Formkörper (5) aus Aluminium besteht.

11. Blasformwerkzeug nach Anspruch 1, **dadurch gekennzeichnet, dass** die Kanäle (54) an der Rückseite (53) des Formkörpers (5) durch Giessen, durch materialabtragende Bearbeitung oder durch alternative Fertigungsverfahren, wie z.B. Laserschmelzen oder Metalldruck, hergestellt sind.

12. Blasformwerkzeug nach Anspruch 1 bis 11, **dadurch gekennzeichnet, dass** der Formkörper (5) eine im Bereich seines Formnests (6) gemessene Mindestwandstärke von 1,5 mm bis 12 mm aufweist.

13. Blasformwerkzeug nach einem der Ansprüche 1 bis 12, **dadurch gekennzeichnet, dass** der Isolationsblock (16) mit Anschlüssen, Kanälen und/oder Bohrungen für die Zu- und Abfuhr eines Heiz-/Kühlmediums zu den an der Rückseite des Formkörpers ausgebildeten Kanälen ausgestattet ist.

14. Blasformwerkzeug nach Anspruch 13, **dadurch gekennzeichnet, dass** im Isolationsblock und an der Rückseite des Formkörpers zwei oder mehrere voneinander getrennte Heiz-/Kühlkreise vorgesehen sind.

15. Blasformwerkzeug nach Anspruch 13 oder 14, **dadurch gekennzeichnet, dass** im Isolationsblock (16) und an der Rückseite (53) des Formkörpers (5) die Heiz-/Kühlkriese durch die selben Kanäle (54) gebildet sind, wobei die Zu- und Abfuhr des entsprechend temperierten Heiz-/Kühlmediums mittels Ventilen derart steuerbar ist, dass abwechselnd das Heizmedium oder das Kühlmedium in die Kanäle (54) einbringbar ist.

16. Blasformwerkzeug nach einem der vorangehenden Ansprüche, **dadurch gekennzeichnet, dass** auf der Grundplatte (4) zwei oder mehrere Formkörper (5) montiert sind, wobei jeder Formkörper (5) durch einen Isolationsblock (16) gegenüber der Grundplatte (4) thermisch isoliert ist.

17. Blasformwerkzeug nach einem der Ansprüche 1 bis 15, **dadurch gekennzeichnet, dass** auf der Grundplatte (4) zwei oder mehrere Formkörper (5) montiert sind, wobei die Formkörper (5) durch einen gemeinsamen Isolationsblock (16) gegenüber der Grundplatte (4) thermisch isoliert sind.

18. Blasformwerkzeug nach einem der vorangehenden Ansprüche, **dadurch gekennzeichnet, dass** das Blasformwerkzeug für den Einsatz in einer Extrusionsblasformmaschine ausgebildet ist.

19. Blasformwerkzeug nach einem der Ansprüche 1 bis 17, **dadurch gekennzeichnet, dass** das Blasformwerkzeug für den Einsatz in einer Streckblasformmaschine ausgebildet ist.

20. Extrusionsblasformmaschine mit einem Blasformwerkzeug gemäss einem der Ansprüche 1 bis 17.

21. Streckblasformmaschine mit einem Blasformwerkzeug gemäss einem der Ansprüche 1 bis 17.

22. Verfahren zur Herstellung eines Kunststoffbehälters mit einem Blasformwerkzeug gemäss einem der Ansprüche 1 bis 17, **gekennzeichnet durch** folgende Verfahrensschritte
a) Aufheizen eines Formkörpers (5) durch Zuführung eines Heizmediums,
b) Einbringen eines Preforms oder eines extrudierten Schlauchs in den Formkörper (5),
c) Schließen des Blasformwerkzeugs,
d) Formen des Kunststoffbehälters durch Aufblasen des Preforms oder des extrudierten Schlauchs und durch Anlegen des Preforms oder des extrudierten Schlauchs an die Wandungsflächen (51) des Formkörpers (5),
e) Abkühlen des Formkörpers (5) durch Zuführung eines Kühlmediums,
f) Öffnen des Blasformwerkzeugs,
g) Auswerfen des Kunststoffbehälters.

23. Verfahren zur Herstellung eines Kunststoffbehälters gemäss Anspruch 22, **dadurch gekennzeichnet, dass** während der Schritte d) und e) jene Oberflächenbereiche, welche in Kontakt mit polierten Wandungsflächen (51) des Formkörpers (5) sind, eine glänzende Oberfläche am Kunststoffbehälter ausbilden.

24. Verfahren zur Herstellung eines Kunststoffbehälters gemäss Anspruch 22 oder 23, **dadurch gekennzeichnet, dass** während der Schritte d) und e) jene Oberflächenbereiche, welche in Kontakt mit strukturierten Wandungsflächen (51) des Formkörpers sind eine strukturierte Oberfläche am Kunststoffbehälter ausbilden.

25. Verfahren zur Herstellung eines Kunststoffbehälters gemäss einem der Ansprüche 22 bis 24, **dadurch gekennzeichnet, dass** als Heizmedium und als Kühlmedium entsprechend temperiertes Wasser eingesetzt wird.

26. Verfahren zur Herstellung eines Kunststoffbehälters gemäss einem der Ansprüche 22 bis 25, **dadurch gekennzeichnet, dass** ein Preform bzw. ein extrudierter Schlauch im wesentlichen umfassend ein Polyolefin in das Blasformwerkzeug eingesetzt wird, und dass das Heizmedium mit einer Temperatur von 120° C bis 200 ° C, vorzugsweise 160° C, und das Kühlmedium mit einer Temperatur von 5 bis 40 ° C, vorzugsweise 15° C, zugeführt wird.

27. Verfahren zur Herstellung eines Kunststoffbehälters gemäss einem der Ansprüche 22 bis 26, **dadurch gekennzeichnet, dass** die Zykluszeit für die Herstellung eines Kunststoffbehälters mit 200ml Füllvolumen 10 bis 15 Sekunden, bevorzugt 12 Sekunden beträgt.

## Claims

1. Blow molding tool for a blow molding machine, comprising two blow mold halves (2, 3), each having at least one molding body (5) in which at least one mold cavity (6) is arranged, and a baseplate (4) receiving the molding body (5), wherein an insulation block (16) made of a thermally insulating material is arranged between the molding body (5) and the baseplate (4) and, optionally, further components of the blow mold half (2, 3), **characterized in that** the molding body (5) has a rear side (53) embedded in the insulation block (16) and provided with channels (54) for the flow of a heating/cooling medium.

2. Blow molding tool according to Claim 1, **characterized in that** the molding body (5) is embedded in the insulation block (16).

3. Blow molding tool according to Claim 2, **characterized in that** the insulation block (16) is embedded in a molding block consisting of the baseplate (4), a bottom, two laterally arranged frame parts, and a neck insert, wherein the frame parts are equipped with guides.

4. Blow molding tool according to Claim 3, **characterized in that** the molding block and the insulation block (16) are formed in one piece.

5. Blow molding tool according to any one of Claims 2 to 4, **characterized in that** the molding body (5) is embedded in the insulation block (16) in such a way that an end face (52) of the molding (5) body which defines a mold parting plane and from which a shaping wall surface (51) delimiting the mold cavity (6) extends in the direction of a rear side of the molding body (5), is recessed from an upper side of the insulation block (16) in a cold state of the molding body (5), while the end face of the molding body (5) ends flush with the upper side of the insulation block (16) or protrudes slightly beyond it when the molding body (5) is heated to the operating temperature.

6. Blow molding tool according to Claim 5, **characterized in that** in the cold state of the molding body (5), the end face (52) of the molding body (5) is recessed from the upper side of the insulation block (16) by 0.05 mm to 0.5 mm.

7. Blow molding tool according to any one of the preceding claims, **characterized in that** the insulation block (16) consists of a thermosetting, high-temperature-resistant plastic with low thermal conductivity, in particular of a hard plastic or plastic composite material.

8. Blow molding tool according to Claim 7, **characterized in that** the insulation block (16) comprises a plastic from the group consisting of polyaryl ether ketones, such as polyether ether ketone (PEEK), polyamides, glass-fiber-reinforced plastics, and reinforced thermosets with a temperature resistance of up to at least 200°C.

9. Blow molding tool according to any one of the preceding claims, **characterized in that** the baseplate (4) is made of stainless steel.

10. Blow molding tool according to any one of the preceding claims, **characterized in that** the molding body (5) is made of aluminum.

11. Blow molding tool according to Claim 1, **characterized in that** the channels (54) are produced on the rear side (53) of the molding body (5) by casting, by machining, or by alternative manufacturing methods, such as fiber melting or metal printing.

12. Blow molding tool according to Claims 10 or 11, **characterized in that** the molding body (5) has a minimum wall thickness of 1.5 mm to 12 mm measured in the region of its mold cavity (6).

13. Blow molding tool according to any one of Claims 10 to 12, **characterized in that** the insulation block (16) is equipped with connections, channels and/or holes for the supply and discharge of a heating/cooling medium to the channels formed on the rear side of the molding body.

14. Blow molding tool according to Claim 13, **characterized in that** two or more separate heating/cooling circuits are provided in the insulation block and on the rear side of the molding body.

15. Blow molding tool according to Claims 13 or 14, **characterized in that** the heating/cooling circuits are formed by the same channels (54) in the insulation block (16) and on the rear side (53) of the molding body (5), wherein the supply and discharge of the correspondingly temperature-controlled heating/cooling medium can be controlled by means of valves in such a way that the heating medium or the cooling medium can be introduced alternately into the channels (54).

16. Blow molding tool according to any one of the preceding claims, **characterized in that** two or more molding bodies (5) are mounted on the baseplate (4), wherein each molding body (5) is thermally insulated from the baseplate (4) by an insulation block (16).

17. Blow molding tool according to any one of Claims 1 to 15, **characterized in that** two or more molding bodies (5) are mounted on the baseplate (4), wherein the molding bodies (5) are thermally insulated from the baseplate (4) by a common insulation block (16).

18. Blow molding tool according to any one of the preceding claims, **characterized in that** the blow molding tool is designed for use in an extrusion blow-molding machine.

19. Blow molding tool according to any one of Claims 1 to 17, **characterized in that** the blow molding tool is designed for use in a stretch blow-molding machine.

20. Extrusion blow-molding machine comprising a blow molding tool according to any one of Claims 1 to 17.

21. Stretch blow-molding machine comprising a blow molding tool according to any one of Claims 1 to 17.

22. Method for producing a plastic container having a blow molding tool according to any one of Claims 1 to 17, **characterized by** the following method steps:
a) heating a molding body (5) by supplying a heating medium,
b) introducing a preform or an extruded parison into the molding body (5),
c) closing the blow molding tool,
d) shaping the plastic container by inflating the preform or the extruded parison and by abutting the preform or the extruded parison against the wall surfaces (51) of the molding body (5),
e) cooling the molding body (5) by supplying a cooling medium,
f) opening the blow molding tool,
g) ejecting the plastic container.

23. Method for producing a plastic container according to Claim 22, **characterized in that** during steps d) and e), the surface regions that are in contact with polished wall surfaces (51) of the molding body (5) form a glossy surface on the plastic container.

24. Method for producing a plastic container according to Claims 22 or 23, **characterized in that** during steps d) and e), the surface regions that are in contact with structured wall surfaces (51) of the molding body (5) form a structured surface on the plastic container.

25. Method for producing a plastic container according to any one of Claims 22 to 23, **characterized in that** correspondingly temperature-controlled water is used as the heating medium and as the cooling medium.

26. Method for producing a plastic container according to any one of Claims 21 to 25, **characterized in that** a preform or an extruded parison substantially comprising a polyolefin is inserted into the blow molding tool, and that the heating medium is supplied at a temperature of 120°C to 200°C, preferably 160°C, and the cooling medium is supplied at a temperature of 5 to 40°C, preferably 15°C.

27. Method for producing a plastic container according to any one of Claims 22 to 26, **characterized in that** the cycle time for the production of a plastic container with a filling volume of 200 ml is 10 to 15 seconds, preferably 12 seconds.

## Revendications

1. Outil de moulage par soufflage destiné à une machine de moulage par soufflage, comprenant deux demi-moules de soufflage (2, 3) qui présentent chacun au moins un corps de moule (5), dans lequel est disposée au moins une cavité (6), et une plaque de base (4) accueillant le corps de moule (5), où il est prévu entre le corps de moule (5) et la plaque de base (4) et, le cas échéant, d'autres composants du demi-moule (2, 3), un bloc isolant (16) en matériau thermiquement isolant, **caractérisé en ce que** le corps de moule (5) présente une face arrière (53) qui est encastrée dans le bloc isolant (16) et est dotée de canaux (54) pour le passage d'un fluide de chauffage/refroidissement.

2. Outil de moulage par soufflage selon la revendication 1, **caractérisé en ce que** le corps de moule (5) est encastré dans le bloc isolant (16).

3. Outil de moulage par soufflage selon la revendication 2, **caractérisé en ce que** le bloc isolant (16) est encastré dans un bloc de moule qui est constitué de la plaque de base (4), d'un fond, de deux éléments de cadre, disposés sur les côtés, et d'un insert de col, les éléments de cadre étant dotés de guides.

4. Outil de moulage par soufflage selon la revendication 3, **caractérisé en ce que** le bloc de moule (5) et le bloc isolant (16) sont réalisés d'une seule pièce.

5. Outil de moulage par soufflage selon l'une des revendications 2 à 4, **caractérisé en ce que** le corps de moule (5) est encastré dans le bloc isolant (16) de manière à ce qu'une face frontale (52) du corps de moule (5), qui définit un plan de joint du moule et depuis laquelle une surface de paroi (51) de moulage, délimitant la cavité (6), s'étend en direction d'une face arrière du corps de moule (5), est en retrait par rapport à une face supérieure du bloc isolant (16), lorsque le corps de moule (5) est à l'état froid, tandis que la face frontale (52) du corps de moule (5) affleure avec la face supérieure (161) du bloc isolant (16) ou dépasse légèrement par rapport à celui-ci, lorsque le corps de moule (5) est chauffé jusqu'à la température de fonctionnement.

6. Outil de moulage par soufflage selon la revendication 5, **caractérisé en ce que**, à l'état froid du corps de moule (5), la face frontale (52) du corps de moule (5) est en retrait de 0,05 mm à 0,5 mm par rapport à la face supérieure (161) du bloc isolant (16).

7. Outil de moulage par soufflage selon l'une des revendications précédentes, **caractérisé en ce que** le bloc isolant (16) est constitué d'une matière plastique thermodurcissable résistant aux hautes températures, avec une faible conductivité thermique, notamment d'une matière plastique dure ou d'une matière plastique composite.

8. Outil de moulage par soufflage selon la revendication 7, **caractérisé en ce que** le bloc isolant (16) comprend une matière plastique du groupe englobant des poly(aryl éther cétones), tels que poly(éther éther cétone) (PEEK), des polyamides, des matières plastiques renforcées par fibres de verre et des thermodurcissables renforcés ayant une résistance aux hautes températures jusqu'à au moins 200 °C.

9. Outil de moulage par soufflage selon l'une des revendications précédentes, **caractérisé en ce que** la plaque de base (4) est en acier inoxydable.

10. Outil de moulage par soufflage selon l'une des revendications précédentes, **caractérisé en ce que** le corps de moule (5) est en aluminium.

11. Outil de moulage par soufflage selon la revendication 1, **caractérisé en ce que** les canaux (54) sur la face arrière (53) du corps de moule (5) sont réalisés par coulée, par usinage avec enlèvement de matière ou par d'autres procédés de fabrication, tels que la fusion au laser ou le repoussage sur métaux.

12. Outil de moulage par soufflage selon les revendications 1 à 11, **caractérisé en ce que** le corps de moule (5) présente une épaisseur de paroi minimale allant de 1,5 mm à 12 mm, mesurée dans la région de sa cavité (6).

13. Outil de moulage par soufflage selon l'une des revendications1 à 12, **caractérisé en ce que** le bloc isolant (16) est doté de raccords, de canaux et/ou de trous pour l'amenée et l'évacuation d'un fluide de chauffage/refroidissement vers les canaux réalisés sur la face arrière du corps de moule.

14. Outil de moulage par soufflage selon la revendication 13, **caractérisé en ce que** dans le bloc isolant et sur la face arrière du corps de moule, il est prévu deux ou plusieurs circuits de chauffage/refroidissement séparés les uns des autres.

15. Outil de moulage par soufflage selon la revendication 13 ou 14, **caractérisé en ce que** dans le bloc isolant (16) et sur la face arrière (53) du corps de moule (5), les circuits de chauffage/refroidissement sont constitués par les mêmes canaux (54), sachant que l'amenée et l'évacuation du fluide de chauffage/refroidissement, dont la température est régulée en conséquence, peuvent être contrôlées à l'aide de vannes, de manière à permettre en alternance l'introduction du fluide de chauffage ou du fluide de refroidissement dans les canaux (54).

16. Outil de moulage par soufflage selon l'une des revendications précédentes, **caractérisé en ce que** deux ou plusieurs corps de moule (5) sont montés sur la plaque de base (4), chaque corps de moule (5) étant isolé thermiquement vis-à-vis de la plaque de base (4) par un bloc isolant (16).

17. Outil de moulage par soufflage selon l'une des revendications 1 à 15, **caractérisé en ce que** deux ou plusieurs corps de moule (5) sont montés sur la plaque de base (4), les corps de moule (5) étant isolés thermiquement vis-à-vis de la plaque de base (4) par un bloc isolant (16) commun.

18. Outil de moulage par soufflage selon l'une des revendications précédentes, **caractérisé en ce que** l'outil de moulage par soufflage est conçu pour une utilisation dans une machine de moulage par extrusion-soufflage.

19. Outil de moulage par soufflage selon l'une des revendications 1 à 17, **caractérisé en ce que** l'outil de moulage par soufflage est conçu pour une utilisation dans une machine de moulage par étirage-soufflage.

20. Machine de moulage par extrusion-soufflage comprenant un outil de moulage par soufflage selon l'une des revendications 1 à 17.

21. Machine de moulage par étirage-soufflage comprenant un outil de moulage par soufflage selon l'une des revendications 1 à 17.

22. Procédé de fabrication d'un récipient en matière plastique avec un outil de moulage par soufflage selon l'une des revendications 1 à 17, **caractérisé en ce qu'**il comprend les étapes de procédé suivantes :
a) chauffage d'un corps de moule (5) par apport d'un fluide de chauffage,
b) introduction d'une préforme ou d'un tube extrudé dans le corps de moule (5),
c) fermeture de l'outil de moulage par soufflage,
d) mise en forme du récipient en matière plastique par soufflage de la préforme ou du tube extrudé, et par application de la préforme ou du tube extrudé contre les surfaces de paroi (51) du corps de moule (5),
e) refroidissement du corps de moule (5) par apport d'un fluide de refroidissement,
f) ouverture de l'outil de moulage par soufflage,
g) éjection du récipient en matière plastique.

23. Procédé de fabrication d'un récipient en matière plastique selon la revendication 22, **caractérisé en ce que** pendant les étapes d) et e), les zones de surface qui sont en contact avec des surfaces de paroi (51) polies du corps de moule (5) forment une surface brillante sur le récipient en matière plastique.

24. Procédé de fabrication d'un récipient en matière plastique selon la revendication 22 ou 23, **caractérisé en ce que** pendant les étapes d) et e), les zones de surface qui sont en contact avec des surfaces de paroi (51) structurées du corps de moule (5) forment une surface structurée sur le récipient en matière plastique.

25. Procédé de fabrication d'un récipient en matière plastique selon l'une des revendications 22 à 24, **caractérisé en ce que** l'on utilise comme fluide de chauffage et comme fluide de refroidissement de l'eau dont la température est régulée de manière correspondante.

26. Procédé de fabrication d'un récipient en matière plastique selon l'une des revendications 22 à 25, **caractérisé en ce que** l'on met en place dans l'outil de moulage par soufflage, une préforme ou un tube extrudé comprenant essentiellement une polyoléfine, et **en ce que** le fluide de chauffage est apporté à une température allant de 120 °C à 200 °C, de préférence 160 °C, et le fluide de refroidissement est apporté à une température allant de 5 à 40 °C, de préférence 15 °C.

27. Procédé de fabrication d'un récipient en matière plastique selon l'une des revendications 22 à 26, **caractérisé en ce que** le temps de cycle pour la fabrication d'un récipient en matière plastique d'un volume de remplissage de 200 ml est de 10 à 15 secondes, de préférence de 12 secondes.
